# EUROPÄISCHE PATENTSCHRIFT

(11) **EP 3 459 811 B1**
(45) Veröffentlichungstag und Bekanntmachung des Hinweises auf die Patenterteilung: **20.10.2021**
(21) Anmeldenummer: 17192644.7
(22) Anmeldetag: 22.09.2017
(51) Int. Cl.: B61L 23/04, B61L 1/16, G01D 5/353

(54) **VERFAHREN ZUR MONTAGE EINER DEHNUNGSMESSANORDNUNG, INSBESONDERE FÜR EINEN ACHSZÄHLER, UND ZUGEHÖRIGE VERWENDUNG**
METHOD OF MOUNTING A STRAIN MEASURING ASSEMBLY, IN PARTICULAR FOR AN AXLE COUNTER, AND ACCORDING USE
PROCÉDÉ DE MONTAGE POUR UN DISPOSITIF DE MESURE DES ALLONGEMENTS, EN PARTICULIER POUR UN COMPTEUR D'ESSIEUX, ET UTILISATION CORRESPONDANTE

(43) Veröffentlichungstag der Anmeldung: 27.03.2019
(73) Patentinhaber: Thales Management & Services Deutschland GmbH, 71254 Ditzingen (DE)
(72) Erfinder: SCHICKER, Kai, 08539 Mehltheuer (DE); OLDEWURTEL, Kassen, 71706 Markgröningen (DE); KLEMM, Rainer, 71711 Steinheim (DE); MUSCHAWECKH, Florian, 85774 Unterföhring (DE); HOFFMANN, Lars, 80796 München (DE)
(74) Vertreter: Kohler Schmid Möbus Patentanwälte

(56) Entgegenhaltungen:
- EP-A1- 1 128 171
- WO-A1-01/35133
- DE-A1-102014 100 653
- DE-B3-102015 115 925

## Beschreibung

Die Erfindung betrifft ein Verfahren zur Montage einer Dehnungsmessanordnung, insbesondere für einen Achszähler, umfassend
- wenigstens ein Dehnungssensorelement, insbesondere eine optische Faser mit einem Fiber-Bragg-Gitter,
- einen Träger, auf dem das Dehnungssensorelement befestigt ist, und
- eine zu überwachende Struktur, insbesondere eine Eisenbahnschiene, auf der der Träger befestigt ist, wobei zumindest ein Teil des Trägers im auf der Struktur befestigten Zustand des Trägers durch die Struktur in einem elastisch verformten Zustand gehalten wird,
wobei der Träger ausgebildet ist mit einem ersten Trägerstück und einen zweiten Trägerstück, die voneinander beabstandet einander gegenüberliegen, und wobei das Dehnungssensorelement zumindest mit einem ersten Fixierpunkt am ersten Trägerstück, und zumindest mit einem zweiten Fixierpunkt am zweiten Trägerstück, und mit einem Mittelabschnitt zwischen den Fixierpunkten weder am ersten noch am zweiten Trägerstück befestigt ist.

Eine entsprechende Dehnungsmessanordnung zur Anbringung an einem Messobjekt ist aus der DE 10 2015 115 925 B3 bekannt geworden.

Um den Eisenbahnverkehr sicherer zu machen, werden Achszähler eingesetzt. Mit Achszählern kann insbesondere überprüft werden, ob der Ort des Achszählers von einem Zug vollständig passiert wurde, um beispielsweise zu ermitteln, ob zugehörige Gleisabschnitte vollständig frei geworden sind.

Ein mögliches Messprinzip von Achszählern beruht darauf, eine durch die von einer Achse übertragene Gewichtskraft eines Zuges verursachte elastische Verformung an einer Schiene mit einem Dehnungssensorelement zu messen.

Die EP 3 069 952 A1 schlägt dazu vor, als Dehnungssensorelement ein Faser-Bragg-Gitter (=FBG, auch Fiber Bragg Gitter) auf einer Schiene unter einer Vorspannung zu befestigen. Die Reflektionswellenlänge des Faser-Bragg-Gitters ist abhängig vom elastischen Dehnungszustand des FBGs, wodurch der Dehnungszustand vermessen werden kann. Durch die Vorspannung kann am Dehnungszustand des FBGs erkannt werden, ob das FBG noch korrekt an der Schiene befestigt oder von der Schiene abgefallen ist. In einer Variante wird vorgeschlagen, die Vorspannung thermisch aufzubringen, indem ein Träger unter Vorspannung an der Schiene angebracht wird.

Aus der DE 10 2005 010 344 A1 ist es zudem bekannt, die Dämpfungseigenschaften in einem Lichtwellenleiter über Biegungszustände zu beeinflussen.

Weiterhin sind beispielsweise auch Dehnungssensorelemente bekannt geworden, die auf einer Widerstands- oder Kapazitätsänderung aufgrund eines veränderlichen Dehnungszustands beruhen.

Das Befestigen von Dehnungssensorelementen unter Vorspannung direkt auf einer zu überwachenden Struktur, etwa einer Eisenbahnschiene, ist jedoch vergleichsweise schwierig. Durch Aufbringung der Vorspannung über einen Träger, auf dem der Dehnungssensor fixiert ist, kann eine gewisse Vereinfachung erzielt werden. Jedoch ist auch in diesem Falle die Einstellung eines bestimmten Dehnungszustands am Dehnungssensorelement (etwa zur Einstellung eines Arbeitspunkts) schwierig.

Die DE 10 2015 115 925 B3 beschreibt einen faseroptischen Sensor mit einer Trägerstruktur. Die Trägerstruktur umfasst zwei Befestigungselemente, zwischen denen mit Befestigungspunkten ein Lichtleiter vorgespannt ist. Die Trägerstruktur verfügt über ein auf zwei Seiten bogenförmig ausgebildetes elastisches Element, mit dem in den Lichtleiter in Längsrichtung eine Vorspannung eingebracht wird. Die Trägerstruktur ist über Verbindungsflächen auf einem Zwischenträger befestigt. Der Zwischenträger wird auf einem Messobjekt befestigt.

### Aufgabe der Erfindung

Der Erfindung liegt die Aufgabe zugrunde, ein einfaches Montageverfahren für eine Dehnungsmessanordnung vorzustellen, das auch in unwirtlicher Umgebung gut einzusetzen ist.

### Kurze Beschreibung der Erfindung

Diese Aufgabe wird gelöst durch ein Verfahren der eingangs genannten Art, gekennzeichnet durch folgende Schritte:
a) Mittels eines Verspannelements wird zumindest der Teil des Trägers elastisch verspannt;
b) Zumindest der Teil des Trägers wird mittels des Verspannelements im elastisch verspannten Zustand gehalten und der Träger auf der zu überwachenden Struktur befestigt, insbesondere aufgeklebt;
c) das Verspannelement wird entfernt.

Dieses Verfahren ist besonders einfach und kann insbesondere auch in unwirtlicher Umgebung (etwa an Schienen von Bahnstrecken in der freien Natur) gut eingesetzt werden. Die Befestigung gemäß Schritt b) ist erst abgeschlossen, wenn die Befestigung eine gewünschte Festigkeit erreicht hat (etwa nach einem Aushärten eines Klebstoffs). Erst nach Schritt c) wird die Dehnungsmessanordnung betrieben, also die Dehnung der zu überwachenden Struktur überwacht. Im Betrieb wird zudem auch überwacht, ob die Verformung des Trägers noch besteht, oder infolge einer Ablösung von der Struktur verloren gegangen ist.

### Bevorzugte Varianten des erfindungsgemäßen Verfahrens

Eine vorteilhafte Variante des erfindungsgemäßen Verfahrens sieht vor, dass das Verspannelement vor Schritt a) fest mit dem Träger verbunden ist, und dass für Schritt a) das Verspannelement vom Träger abgebrochen wird. Das am Träger ausgebildete oder befestigte Verspannelement ist für die Montage stets zur Hand, und kann für den Verspannvorgang einfach abgebrochen und sofort eingesetzt werden. Das Verspannelement kann insbesondere als Exzenter ausgebildet sein.

Ebenso vorteilhaft ist eine Variante, die vorsieht, dass das Verspannelement in Schritt a) und b) fest mit dem Träger verbunden ist, und dass für Schritt c) das Verspannelement vom Träger abgebrochen wird. Auch hier ist das Verspannelement, das am Träger zunächst befestigt oder ausgebildet ist, stets zur Hand. Das Verspannelement setzt bzw. hält vor dem Abbrechen den übrigen Träger unter Vorspannung, die für die Installation genutzt wird. Nach Abschluss der Befestigung des Trägers an der Struktur wird das Verspannelement abgebrochen, so dass die Vorspannung nur noch über die Befestigung (etwa Klebung oder Verschraubung) an der Struktur gehalten wird, so dass bei einem Abfallen von der Struktur die Vorspannung bzw. zugehörige elastische Verformung verloren geht.

Vorteilhaft ist eine Weiterentwicklung dieser Varianten, wobei nach Montage einer oder mehrerer Dehnungsmessanordnungen die abgebrochenen und in Schritt c) entfernten Verspannelemente auf Vollständigkeit überprüft werden. Dadurch kann eine einfache Anscheinskontrolle erfolgen, ob die Dehnungsmessanordnungen korrekt montiert wurden.

### Erfindungsgemäße Verwendung einer Dehnungsmessanordnung

In den Rahmen der vorliegenden Erfindung fällt auch die Verwendung einer Dehnungsmessanordnung, insbesondere für einen Achszähler, umfassend
- wenigstens ein Dehnungssensorelement, insbesondere eine optische Faser mit einem Fiber-Bragg-Gitter,
- einen Träger, auf dem das Dehnungssensorelement befestigt ist, und
- eine zu überwachende Struktur, insbesondere eine Eisenbahnschiene, auf der der Träger befestigt ist, wobei zumindest ein Teil des Trägers im auf der Struktur befestigten Zustand des Trägers durch die Struktur in einem elastisch verformten Zustand gehalten wird,
wobei der Träger ausgebildet ist mit einem ersten Trägerstück und einen zweiten Trägerstück, die voneinander beabstandet einander gegenüberliegen, und wobei das Dehnungssensorelement zumindest mit einem ersten Fixierpunkt am ersten Trägerstück, und zumindest mit einem zweiten Fixierpunkt am zweiten Trägerstück, und mit einem Mittelabschnitt zwischen den Fixierpunkten weder am ersten noch am zweiten Trägerstück befestigt ist, in einem oben beschriebenen, erfindungsgemäßen Montageverfahren.

Mit der verwendeten Dehnungsmessanordnung ist ein Abfallen zuverlässig erkennbar und ein Dehnungszustand des Dehnungssensorelements leichter vorgebbar.

Im Rahmen der Erfindung ist es vorgesehen, das Dehnungssensorelement nicht über seine gesamte Messlänge am Träger linienhaft zu befestigen, sondern das Dehnungssensorelement lediglich mit einem ersten Fixierpunkt an einem ersten Trägerstück, und mit einem zweiten Fixierpunkt an einem zweiten Trägerstück. Im dazwischen liegenden Mittelabschnitt wird das Dehnungssensorelement frei gehalten.

Dadurch ist es grundsätzlich möglich, den Dehnungszustand des Dehnungssensorelements vom elastischen Verformungszustand des Trägers zumindest teilweise zu entkoppeln. Es wird insbesondere möglich, eine elastische Verformung des Trägers infolge einer Verformung der überwachten Struktur je nach Anwendungsfall abgeschwächt oder verstärkt oder erst ab bestimmten Schwellwerten auf das Dehnungssensorelement zu übertragen, oder bestimmte Arten von Verformung des Trägers verstärkt auf das Dehnungssensorelement zu übertragen. Dadurch kann das Dehnungssensorelement in einem optimalen Arbeitsbereich betrieben werden, und bestimmte Überwachungsfunktionen des Dehnungssensorelements, etwa die Erkennung eines Abfallens von der Struktur, können zuverlässiger gemacht werden. Gleichzeitig kann die Befestigung des Trägers an der Struktur mit einer einfach zu beherrschenden elastischen Verformung des Trägers erfolgen, ohne durch das Dehnungssensorelement zu sehr eingeschränkt zu sein.

Am Mittelabschnitt ist ein einfacher und direkter Zugriff auf das Dehnungssensorelement möglich, insbesondere ohne durch eine Vorformung eines darunter liegenden Trägers in der Verformung des Dehnungssensorelements festgelegt zu sein. Im Mittelabschnitt kann beispielsweise eine zusätzliche Straffung (etwa durch ein Mitnahmeelement), oder auch eine zusätzliche Entlastung (etwa durch Überlänge) des Dehnungssensorelements gegenüber dem Träger erfolgen.

Die Befestigung des Trägers auf der zu überwachenden Struktur, wobei zumindest ein Teil des Trägers durch die Struktur in einem elastisch verformten Zustand gehalten wird, ermöglicht auf einfache Weise eine Kontrolle, ob die Dehnungsmessanordnung noch korrekt an der Struktur sitzt oder von der Struktur abgefallen ist; letzteres führt zu einem Zurückfedern in einen elastisch unverformten Zustand des Trägers bzw. zumindest des besagten Teils. Ein Abfallen von der Struktur kann beispielsweise bei einer Alterung oder temperaturbedingten Erweichung einer Befestigung vorkommen. Bevorzugt ist die Dehnungsmessanordnung so ausgebildet, dass die elastische Verformung bzw. Verspannung des Trägers über eine gemessene Dehnung des Dehnungssensorelements ermittelbar ist (d.h. die elastische Verformung des Trägers liegt im überwachten Bereich des Dehnungssensorelements). Alternativ ist es auch möglich, eine von dem Dehnungssensorelement bzw. dessen Dehnung separate Messeinrichtung bzw. Messung vorzusehen, mit der die Verformung des Trägers überprüft werden kann (etwa unter Verwendung eines weiteres Dehnungssensorelements).

Meist umfasst eine Dehnungsmessanordnung lediglich ein Dehnungssensorelement, alternativ auch zwei oder noch mehr Dehnungssensorelemente.

Ein Dehnungssensorelement ist im Rahmen der Erfindung mit einem ersten und zweiten Fixierpunkt an einem ersten und zweiten Trägerstück befestigt sind, und in einem Mittelabschnitt nicht an diesen Trägerstücken (und auch nicht an anderen Teilen des Trägers) befestigt. Der Träger umfasst neben dem ersten und zweiten Trägerstück meist noch ein oder mehrere weitere Teilstücke (etwa ein Grundelement oder eine Spange).

Das Dehnungssensorelement ist bevorzugt als eine optische Faser mit einem Fiber-Bragg-Gitter (=FBG) ausgebildet; das FBG befindet sich dabei zwischen den Fixierpunkten im Mittelabschnitt. Typischerweise ist das Dehnungssensorelement im auf der Struktur befestigtem Zustand des Trägers unter einer geringen elastischen Dehnung, so dass sowohl Stauchungen als auch Streckungen der zu überwachenden Struktur leicht erkannt werden können.

Eine Dehnungsmessanordnung kann insbesondere in einem Achszähler verwendet werden; ein solcher Achszähler umfasst wenigstens eine erfindungsgemäße Dehnungsmessanordnung. Es können aber auch andere Anwendungen für die Dehnungsmessanordnung vorgesehen sein, etwa zur Überwachung von mechanischer Belastung oder Verschleiß von Maschinenbauteilen. Ein Dehnungssensorelement kann unter schrägem Winkel, etwa einem Winkel von ca. 45°, zu einer neutralen Faser einer zu überwachenden Struktur angeordnet werden. Die Befestigung des Trägers auf der zu überwachenden Struktur kann beispielsweise durch Verschrauben, Verlöten oder Verkleben erfolgen. Die Befestigung des Dehnungssensorelements an den Trägerstücken kann beispielsweise durch Verklemmen, Verlöten oder Verkleben erfolgen.

Zusammenfassend ist es mit der Erfindung besonders einfach möglich, zum einen das Dehnungssensorelement (im auf der Struktur befestigten Zustand des Trägers) auf einer gewünschten Vorspannung zu halten, und zum anderen mittels zumindest des Teils des Trägers zu überwachen, ob der Träger noch an der zu überwachenden Struktur (ausreichend) befestigt ist.

Vorteilhaft ist auch eine Variante der erfindungsgemäßen Verwendung, bei der der Teil des Trägers, der im auf der Struktur befestigten Zustand des Trägers durch die Struktur in einem elastisch verformten Zustand gehalten wird, das erste Trägerstück und das zweite Trägerstück umfasst, wobei das erste Trägerstück und das zweite Trägerstück zumindest mit einer Richtungskomponente entlang einer Erstreckungsrichtung des Dehnungssensorelements zueinander elastisch verspannt sind. Diese Bauform ist besonders einfach. Die elastische Verformung des Trägers wirkt mit ihrer Richtungskomponente unmittelbar auf den Dehnungszustand des Dehnungssensorelements ein.

Bevorzugt ist eine Weiterentwicklung dieser Variante, bei der das erste und zweite Trägerstück durch eine Spange miteinander verbunden sind, insbesondere wobei die Spange vom Dehnungssensorelement um einem Abstand AS beabstandet ist, bevorzugt wobei für den Abstand AS und einen Abstand AE von erstem und zweitem Fixierpunkt gilt: AS≥1*AE, besonders bevorzugt AS≥3*AE. Die Spange (manchmal auch als Steg bezeichnet) wirkt als ein Festgelenk; um dieses können die Trägerstücke elastisch gegeneinander verdreht (tordiert) werden. Durch geeignete Abstände (und geeignete elastische Auslenkung) kann die Kraft auf das Dehnungssensorelement eingestellt werden; mit AS≥3*AE ist dies besonders genau möglich. Falls gewünscht, können eine oder mehrere Federn zwischen den Trägerstücken angeordnet werden, um das elastische Verhalten des Trägers zu verändern. Alternativ oder zusätzlich kann eine Verbindung der Trägerstücke über ein Grundelement vorgesehen sein.

Bevorzugt ist eine Weiterentwicklung, bei der der Träger ein Verspannlager ausbildet, an oder in welchem ein Verspannelement anordenbar ist, das am ersten und zweiten Trägerstück angreift,
insbesondere wobei Verspannlager und Verspannelement nach Art eines Exzenters zusammenwirken. Mit dem Verspannlager und dem Verspannelement kann auf den Träger bzw. zumindest dessen Teil eine elastische Verformung zeitweilig aufgeprägt werden, insbesondere während der Träger auf der Struktur befestigt (etwa verklebt) wird. Mit einem Exzenter ist die Kraftaufbringung besonders einfach, insbesondere auch manuell, möglich.

Vorteilhafter Weise wird während des Montageverfahrens ein an oder im Verspannlager angeordnetes Verspannelement von dem Träger abgebrochen, insbesondere aus dem Innenbereich des Verspannlagers. Das Verspannelement kann zunächst als Teil des Trägers gefertigt werden, und ist dann bei der Installation zusammen mit dem Träger direkt zur Hand. Für den Einsatz im Verspannlager kann das Verspannelement (etwa ein Exzenter) vom Träger abgebrochen (etwa aus dem Verspannlager heraus gebrochen) werden, und für ein Verspannen ins Verspannlager eingesetzt werden (soweit erforderlich) und aktiviert werden, insbesondere verdreht werden. Alternativ kann das Verspannelement auch durch Abbrechen eine zuvor vorhandene Spannwirkung verlieren.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: eine schematische Aufsicht auf eine erste Bauform einer Dehnungsmessanordnung für die Erfindung, mit rahmenförmigem Grundelement;
- Fig. 1b: eine schematische Querschnittsansicht der Dehnungsmessanordnung von Fig. 1a;
- Fig. 2: eine schematische Aufsicht auf eine zweite Bauform einer Dehnungsmessanordnung für die Erfindung, mit Spange;
- Fig. 3a: eine schematische Aufsicht auf eine dritte Bauform einer Dehnungsmessanordnung für die Erfindung, mit noch nicht ausgebrochenem Exzenter;
- Fig. 3b: die Dehnungsmessanordnung von Fig. 3a, mit aufspreizendem Exzenter;
- Fig. 3c: die Dehnungsmessanordnung von Fig. 3b, nach Befestigung auf der Struktur und mit entferntem Exzenter;
- Fig. 4a: eine schematische Ausführungsform einer vierte Bauform einer Dehnungsmessanordnung für die Erfindung, mit Spange und fest verbundenem bügelförmigem Verspannelement, beim Befestigen auf einer Struktur;
- Fig. 4b: die Dehnungsmessanordnung von Fig. 4a, nach der Befestigung auf der Struktur, mit abgebrochenem Verspannelement;
- Fig. 4c: die Dehnungsmessanordnung von Fig. 4b, nach einem Abfallen von der Struktur;
- Fig. 5: eine schematische Ansicht eines Achszählers, umfassend zwei Dehnungsmessanordnungen.

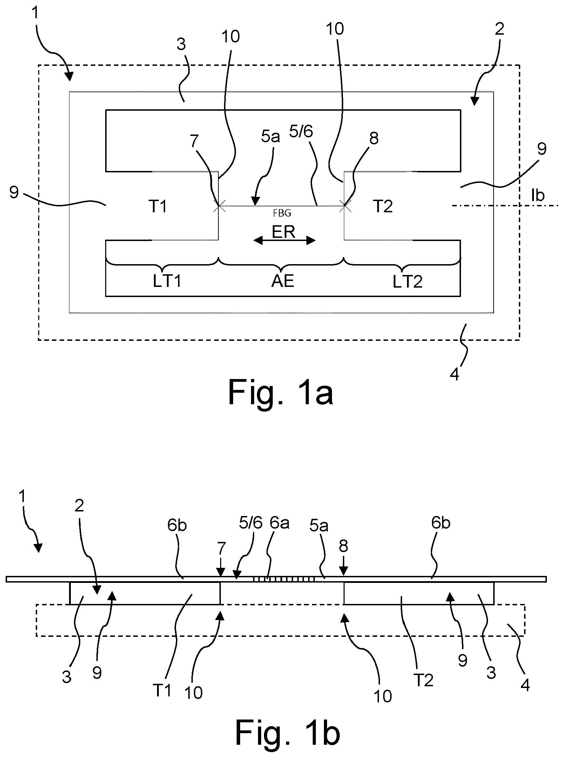

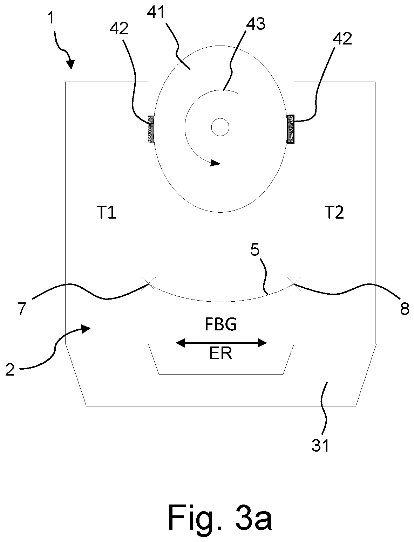

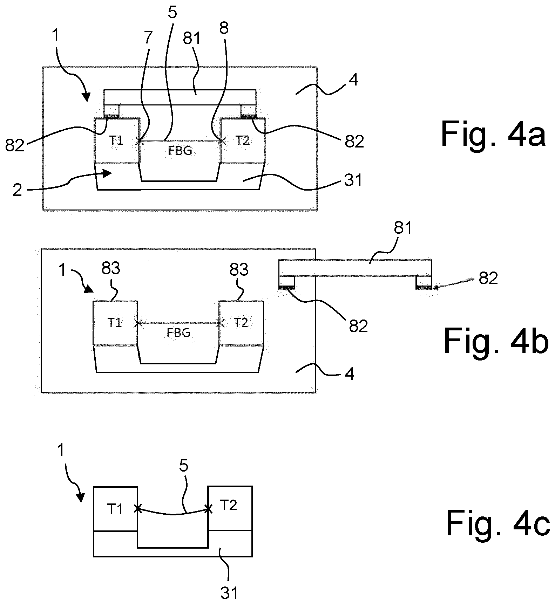

Die **Fig. 1a** zeigt eine erste Bauform einer Dehnungsmessanordnung 1 in einer Aufsicht, und **Fig. 1b** eine zugehörige Querschnittsansicht, vgl. Ebene Ib in Fig. 1a. Die Dehnungsmessanordnung 1 kann im Rahmen eines erfindungsgemäßen Montageverfahrens verwendet werden (zum Ablauf eines erfindungsgemäßen Montageverfahrens siehe Fig. 3a-3c und Fig. 4a-4c unten).

Die Dehnungsmessanordnung 1 umfasst einen Träger 2, der hier ein ringförmig geschlossenes, im Wesentlichen rechteckiges Grundelement 3 sowie ein erstes Trägerteil T1 und ein zweites Trägerteil T2 umfasst. Die Trägerteile T1, T2 stehen nach innen vom Grundelement 3 ab, welches einen äußeren Rahmen des Trägers 2 ausbildet.

Der Träger 2 ist mit dem rahmenförmigen Grundelement 3 in nicht näher dargestellter Weise auf einer zu überwachenden Struktur 4 befestigt, beispielsweise mit der gesamten Unterseite des Grundelements 3 auf der Struktur 4 aufgeklebt; die Unterseiten der Trägerstücke T1, T2 sind jedoch nicht auf der Struktur 4 aufgeklebt, sondern liegen nur auf der Struktur 4 auf. Die zu überwachende Struktur 4 kann beispielsweise eine Eisenbahnschiene einer Zugfahrstrecke sein.

Auf den Trägerstücken T1 und T2 ist ein Dehnungssensorelement 5 an Fixierpunkten 7, 8 befestigt. Die Fixierpunkte 7, 8 liegen jeweils am inneren Ende der Teilstücke T1, T2. Der zwischen den Fixierpunkten 7, 8 liegende Mittelabschnitt 5a des Dehnungssensorelements 5 ist hier zwischen den Teilstücken T1, T2 frei gespannt.

In der gezeigten Ausführungsform ist das Dehnungssensorelement 5 als eine optische Faser 6 mit einem Fiber-Bragg-Gitter (auch Faser Bragg Gitter, FBG) 6a im Mittelabschnitt 5a ausgebildet. Man beachte, dass in Fig. 1a zur Vereinfachung die Faser 6 nur im Bereich des Mittelabschnitts 5a dargestellt ist; Fig. 1b zeigt auch Zuleitungen 6b der Faser 6. Alternativ können auch andere Dehnungssensorelement-Typen, etwa elektrische Widerstandsmessstreifen, eingesetzt werden.

In einem Grundzustand für die Verwendung des Dehnungssensorelements 5 zur Überwachung der Dehnung der Struktur 4 ist das Dehnungssensorelement 5 typischerweise im Mittelabschnitt 5a in Erstreckungsrichtung ER der Faser 6 geringfügig elastisch gedehnt, um den Arbeitspunkt des FBGs einzustellen. Die elastische Dehnung des Dehnungssensorelements 5 kann dabei bei der bzw. durch die Befestigung des Dehnungssensorelements 5 an den Fixierpunkten 7, 8 (im Grundzustand) praktisch beliebig vorgegeben werden.

Verformt sich die Struktur 4, so wird auch das Grundelement 3, das auf der Struktur 4 befestigt ist, mit verformt. Diese Verformung des Grundelements 3 wird über die Trägerstücke T1, T2 auf das Dehnungssensorelement 5 übertragen, wodurch diese Verformung messbar wird.

Eine gesamte Länge GL der Teilstücke T1, T2 jeweils vom hinteren Bereich 9 bis zum vorderen Bereich 10, wo der jeweilige Fixierpunkt 7, 8 angeordnet ist, mit GL=LT1+LT2, ist hier deutlich größer als der Abstand AE der Fixierpunkte 7, 8. In der gezeigten Ausführungsform gilt näherungsweise GL=2*AE; im allgemeinen ist GL≥2*AE oder auch GL≥3*AE bevorzugt. Durch die parallel zur Erstreckungsrichtung ER des Dehnungssensorelements 5 hervorstehenden Teilstücke T1, T2, die die bei Verformung der Struktur 4 entlang der Erstreckungsrichtung ER sich zwar bewegen, aber selbst kaum verformt werden, kann die Verformung der Struktur 4 bzw. des Rahmens in Erstreckungsrichtung ER verstärkt auf das Dehnungssensorelement 5 übertragen werden, entsprechend dem Verhältnis AE/(LT1+AE+LT2).

Im bereits erwähnten Grundzustand ist das rahmenförmige Grundelement 3 in einem elastisch verformten Zustand, in welchem es durch die darunter liegende Struktur 4, auf der das Grundelement 3 befestigt ist, gehalten wird. Vorliegend ist das Grundelement 3 bezüglich der Erstreckungsrichtung ER geringfügig elastisch gestreckt. Falls das Grundelement 3 bzw. der Träger 2 von der Struktur 4 abfallen sollte, würde die elastische Verformung des Grundelements 3 zurückfedern, hier also sich das Grundelement 3 in Erstreckungsrichtung ER zusammenziehen. Dadurch würde auch der elastische Dehnungszustand des Dehnungssensorelements 5 verändert, wodurch das Abfallen von der Struktur 4 aufgedeckt werden kann.

In den weiter beschriebenen Bauformen von Dehnungsmessanordnungen werden vor allem die Unterschiede zur Bauform von Fig. 1a, 1b erläutert.

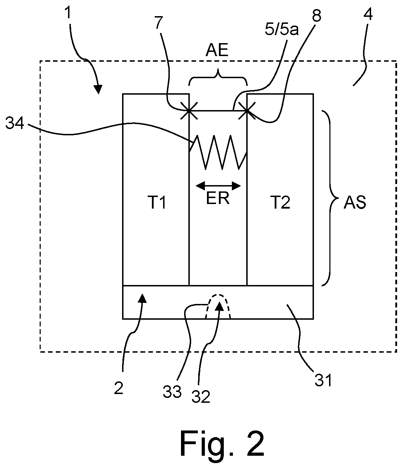

Die **Fig. 2** zeigt eine zweite Bauform einer Dehnungsmessanordnung 1, die im Rahmen eines erfindungsgemäßen Montageverfahrens verwendet werden kann, in schematischer Aufsicht.

Der Träger 2 umfasst hier die Teilstücke T1, T2, an denen an den Fixierpunkten 7, 8 das Dehnungssensorelement 5 befestigt ist, und eine Spange 31, die einenends (in Fig. 1 unterenends) die Teilstücke T1, T2 miteinander verbindet. Die Erstreckungsrichtung ER des Dehnungssensorelements ER verlauft parallel zur Spange 31 bzw. deren Verbindungsrichtung.

Der Träger 2 wird in einem elastisch verformten Zustand, nämlich mit einer gewissen gegenseitigen Torsion der Teilstücke T1, T2 näherungsweise um einen Gelenkbereich 32 in der Mitte der Spange 31 auf der Struktur 4 befestigt.

Die Torsion wirkt im Bereich des Dehnungssensorelements 5 näherungsweise parallel zur Erstreckungsrichtung ER des Dehnungssensorelements 5.
Bei einem Abfallen von der Struktur 4 federt diese Torsion zurück, wodurch sich der Dehnungszustand am Dehnungssensorelement 5 ändert. An der Torsion beteiligt sind sowohl die Teilstücke T1, T2, als auch die Spange 31.

Bevorzugt ist der Abstand AS zwischen Spange 31 (bzw. deren oberen Teil) und dem Dehnungssensorelement 5 deutlich größer als der Abstand AE der Fixierpunkte 7, 8, um die Kräfte im Bereich des Dehnungssensorelements 5 gut kontrollieren zu können. In der gezeigten Ausführungsform gilt ca. AS=3*AE; allgemein wird bevorzugt AS≥2*AE oder AS≥3*AE gewählt.

Falls gewünscht, kann die Spange 31 im Gelenkbereich 32 geschwächt werden, etwa mit einer Einkerbung 33. Dadurch können beispielsweise bei gleicher Kraft größere Torsionen bewirkt werden, wodurch die Erkennung eines Abfallens von der Struktur erleichtert wird. Ebenso ist es möglich, zwischen den Teilstücken T1, T2 eine Feder 34 oder auch mehrere Federn 34 (je nach Bedarf Zug- oder Druckfedern) anzuordnen, um das elastische Verhalten der Teilstücke T1, T2 zueinander einzustellen.

Man beachte, dass auch in dieser Bauform das Dehnungssensorelement 5 im Mittelabschnitt 5a frei gespannt werden kann, und ein elastischer Dehnungszustand des Dehnungssensorelements 5 im Grundzustand grundsätzlich frei bestimmt werden kann.

Die **Fig. 3a** zeigt eine dritte Bauform einer erfindungsgemäßen Dehnungsmessanordnung 1. Der Träger 2 umfasst hier die Trägerstücke T1, T2, an denen das Dehnungssensorelement 5 mit den Fixierpunkten 7, 8 befestigt ist, sowie eine Spange 31, welche die Trägerstücke T1, T2 miteinander verbindet. Vor einer Montage der Dehnungsmessanordnung 1 ist hier zwischen den Trägerstücken T1, T2 ein Verspannelement 41, das als ein Exzenter ausgebildet ist, gehalten. Das Verspannelement 41 ist typischerweise aus einem Stück mit dem übrigen Träger 2 gefertigt (etwa durch Laserschneiden aus einem Blech), und wird an zwei Sollbruchstellen 42 am übrigen Träger 2, hier zwischen den Trägerstücken T1, T2, gehalten. In der in Fig. 4a gezeigten Situation ist der Träger 2 in einem elastisch entspannten Zustand, und noch nicht an einer Struktur befestigt. Das Verspannelement 41 ist mit seiner langen Seite parallel zu den Trägerstücken T1, T2 bzw. senkrecht zur Erstreckungsrichtung ER des Dehnungssensorelements 5 ausgerichtet. Das Dehnungssensorelement 5 hängt schlaff zwischen den Trägerstücken T1, T2; dieser Zustand ist durch eine Dehnungsmessung leicht festzustellen.

Für die Montage auf einer zu überwachenden Struktur 4 wird das Verspannelement 41 von den Sollbruchstellen 42 abgebrochen, etwa durch Drehen 43 des Verspannelements 41 wie in Fig. 4a gezeigt.

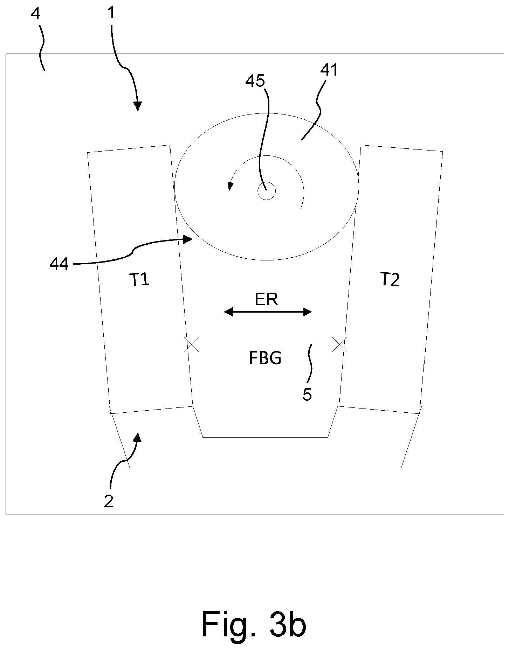

Durch eine halbe Drehung des Verspannelements 41 bzw. Exzenters spreizt dieser die Teilstücke T1, T2 auf (bzw. bringt eine Torsion bezüglich der Trägerstücke T1, T2 auf), wodurch der Träger 2 einen elastisch verformten Zustand einnimmt, vgl. **Fig. 3b****.** Zwischen den Innenseiten der Trägerstücke T1, T2 ist somit ein Verspannlager 44 für das Verspannelement 41 eingerichtet; typischerweise ist für das Verspannelement 41 eine feste Drehachse 45 eingerichtet. Das Dehnungssensorelement 5 wird gestrafft und erhält eine leichte elastische Dehnung, entsprechend seinem Arbeitspunkt. Das Verspannelement 41 ist mit seiner langen Seite senkrecht zu den Trägerstücken T1, T2 bzw. parallel zur Erstreckungsrichtung ER des Dehnungssensorelements 5 ausgerichtet. In diesem aufgespreizten Zustand wird der Träger 2 auf der zu überwachenden Struktur 4 befestigt, etwa aufgeklebt.

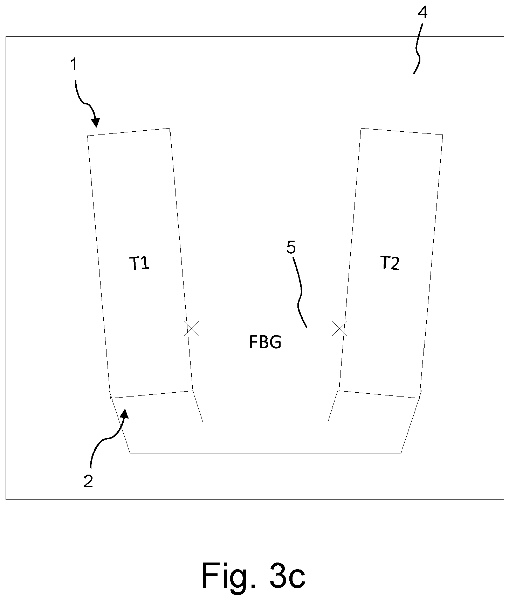

Nach der Befestigung auf der Struktur 4 (etwa nach einem Aushärten eines Klebers) kann das Verspannelement entfernt werden, vgl. **Fig. 3c****.** Solange die Dehnungsmessanordnung 1 auf der Struktur 4 befestigt bleibt, bleibt auch der elastisch verformte Zustand des Trägers 2 und die leichte elastische Dehnung des Dehnungssensorelements 5 erhalten. Sollte ein Ablösen von der Struktur 4 erfolgen, so würde die Dehnungsmessanordnung 1 in den in Fig. 3a gezeigten, elastisch entspannten Zustand zurückkehren, was durch die Erschlaffung des Dehnungssensors 5 leicht gemessen werden könnte.

Die **Fig. 4a** zeigt eine vierte Bauform einer Dehnungsmessanordnung 1 zur Verwendung in einem erfindungsgemäßen Montageverfahren. Deren Träger 2 umfasst die Teilstücke T1, T2, an denen an den Fixierpunkten 7, 8 das Dehnungssensorelement 5 befestigt ist. Die Teilstücke T1, T2 sind zum einen über eine Spange 31 des Trägers 2 fest miteinander verbunden, und zum anderen hier auch über ein bügelförmiges Verspannelement 81 fest miteinander verbunden.

Durch das Verspannelement 81 wird in der Spange 31 eine elastische Verformung erzwungen, wobei hier die Teilstücke T1, T2 voneinander weg gespreizt werden (bzw. gegeneinander tordiert werden, vgl. hierzu auch die Beschreibung von Fig. 1 oben). In diesem Zustand wird der Träger 2 (mit den Teilstücken T1, T2 und der Spange 31, nicht aber mit dem Verspannelement 81) auf einer zu überwachende Struktur 4 befestigt, etwa aufgeklebt.

Nach vollständiger Befestigung wird das Verspannelement 81 entfernt; hierfür wird das Verspannelement 81 an Sollbruchstellen 82 vom Träger 2 abgebrochen, vgl. **Fig. 4b****.** Der elastisch gespreizte Zustand der Spange 31 wird durch die Struktur 4, auf der der Träger 2 befestigt ist, aufrecht erhalten. Die Bereiche der an den Trägerstücken T1, T2 verbleibenden Bruchflächen können als ein Verspannlager 83 für das Verspannelement 81 aufgefasst werden.

Sollte die Dehnungsmessanordnung 1 einmal von der Struktur 4 abfallen, so nimmt die Spange 31 daraufhin einen elastisch entspannten Zustand ein. Dieser ist in **Fig. 4c** gezeigt. Dadurch nähern sich die Teilstücke T1, T2 aneinander an, und das Dehnungssensorelement 5 erschlafft. Dies ist leicht am Dehnungssensorelement zu messen.

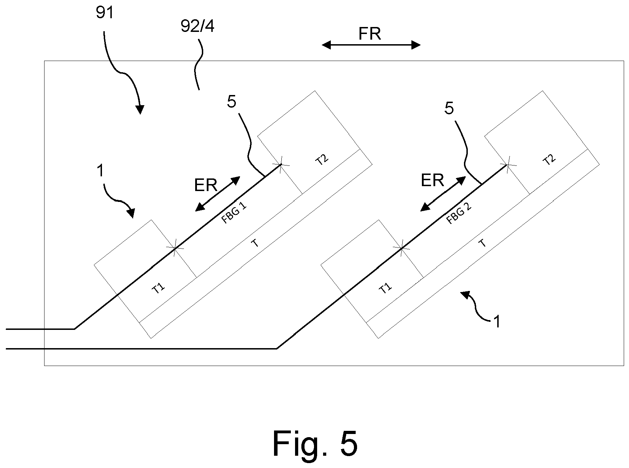

Die **Fig. 5** illustriert in einer schematischen Seitenansicht einen Achszähler 91 für die Erfindung, der seitlich an einer Eisenbahnschiene 92 (etwa am so genannten Schienensteg) als zu überwachender Struktur 4 befestigt ist. Der Achszähler 91 umfasst hier zwei Dehnungsmessanordnungen 1, die hier beispielhaft jeweils mit zwei Teilstücken T1, T2 und einer diese verbindenden Spange 31 ausgebildet sind (vgl. z. B. Fig. 1). Auf der Eisenbahnschiene 92 können in Fahrtrichtung FR Züge verfahren, deren Zugachsen mit dem Achszähler 91 detektiert werden können. Die Erstreckungsrichtungen ER der Dehnungssensorelemente 5 verlaufen hier schräg zur Fahrtrichtung FR, in der gezeigten Ausführungsform unter einem Winkel von ca. 45°. Man beachte, dass die Fahrtrichtung FR gleichzeitig der Verlaufsrichtung einer neutralen Faser in der Eisenbahnschiene 92 bzw. Struktur 4 unter der Belastung der Züge entspricht.

Rollt beispielsweise eine Zugachse von links nach rechts in Fig. 5 oben über den Achszähler 91, so registriert die linke Dehnungsmessanordnung 1 zunächst eine relative Dehnung, und dann eine relative Stauchung gegenüber einem Grundzustand (ohne Zugüberfahrt). Zeitlich etwas später registriert auch die rechte Dehnungsmessanordnung 1 zunächst eine relative Dehnung, und dann eine relative Stauchung gegenüber dem Grundzustand. Bei entgegengesetzter Fahrtrichtung ist die Abfolge der Ereignisse entsprechend umgekehrt.

Durch die beiden Dehnungsmessanordnungen 1 im Achszähler 91 kann eine Redundanz eingerichtet werden, die die Sicherheit im Zugbetrieb verbessert. Man beachte, dass in einfacheren Ausführungsformen auch lediglich eine Dehnungsmessanordnung im Achszähler 91 vorgesehen sein kann.

### Bezugszeichenliste

- 1: Dehnungsmessanordnung
- 2: Träger
- 3: Grundelement
- 4: zu überwachende Struktur
- 5: Dehnungssensorelement
- 5a: Mittelabschnitt
- 6: optische Faser
- 6a: Fiber-Bragg-Gitter
- 6b: Zuleitung
- 7: erster Fixierpunkt
- 8: zweiter Fixierpunkt
- 9: hinterer Bereich
- 10: vorderer Bereich
- 31: Spange
- 32: Gelenkbereich
- 33: Einkerbung
- 34: Feder
- 41: Verspannelement (Exzenter)
- 42: Sollbruchstelle
- 43: Drehrichtung
- 44: Verspannlager
- 45: feste Drehachse
- 81: Verspannelement (bügelförmig)
- 82: Sollbruchstelle
- 83: Verspannlager (für bügelförmiges Verspannelement)
- 91: Achszähler
- 92: Eisenbahnschiene
- AE: Abstand Fixierpunkte
- ER: Erstreckungsrichtung (Dehnungssensorelement)
- GL: gesamte Länge Teilstücke T1, T2
- FBG: Fiber Bragg Gitter (Faser Bragg Gitter)
- FR: Fahrtrichtung
- LT1: Länge Teilstück T1
- LT2: Länge Teilstück T2
- T1: erstes Teilstück (Dehnungssensorelement)
- T1': erstes Teilstück (weiteres Dehnungssensorelement)
- T2: zweites Teilstück (Dehnungssensorelement)
- T2': zweites Teilstück (weiteres Dehnungssensorelement)

## Patentansprüche

1. Verfahren zur Montage einer Dehnungsmessanordnung (1), insbesondere für einen Achszähler (91),
mit der Dehnungsmessanordnung (1) umfassend
- wenigstens ein Dehnungssensorelement (5), insbesondere eine optische Faser (6) mit einem Fiber-Bragg-Gitter (6a, FBG),
- einen Träger (2), auf dem das Dehnungssensorelement (5) befestigt ist, und
- eine zu überwachende Struktur (4), insbesondere eine Eisenbahnschiene, auf der der Träger (2) befestigt ist, wobei zumindest ein Teil des Trägers (2) im auf der Struktur (4) befestigten Zustand des Trägers (2) durch die Struktur (4) in einem elastisch verformten Zustand gehalten wird,
wobei der Träger (2) ausgebildet ist mit einem ersten Trägerstück (T1) und einen zweiten Trägerstück (T2), die voneinander beabstandet einander gegenüberliegen,
und wobei das Dehnungssensorelement (5) zumindest mit einem ersten Fixierpunkt (7) am ersten Trägerstück (T1), und zumindest mit einem zweiten Fixierpunkt (8) am zweiten Trägerstück (T2), und mit einem Mittelabschnitt (5a) zwischen den Fixierpunkten (7, 8) weder am ersten noch am zweiten Trägerstück (T1, T2) befestigt ist,
**gekennzeichnet durch** folgende Schritte:
a) Mittels eines Verspannelements (41; 81) wird zumindest der Teil des Trägers (2) elastisch verspannt;
b) Zumindest der Teil des Trägers (2) wird mittels des Verspannelements (41; 81) im elastisch verspannten Zustand gehalten und der Träger (2) auf der zu überwachenden Struktur (4) befestigt, insbesondere aufgeklebt;
c) das Verspannelement (41; 81) wird entfernt.

2. Verfahren nach Anspruch 1, **dadurch gekennzeichnet, dass** das Verspannelement (41) vor Schritt a) fest mit dem Träger (2) verbunden ist, und dass für Schritt a) das Verspannelement (41) vom Träger (2) abgebrochen wird.

3. Verfahren nach Anspruch 1, **dadurch gekennzeichnet, dass** das Verspannelement (81) in Schritt a) und b) fest mit dem Träger (2) verbunden ist, und dass für Schritt c) das Verspannelement (81) vom Träger (2) abgebrochen wird.

4. Verfahren nach Anspruch 2 oder 3, dass nach Montage einer oder mehrerer Dehnungsmessanordnungen (1) die abgebrochenen und in Schritt c) entfernten Verspannelemente (41; 81) auf Vollständigkeit überprüft werden.

5. Verwendung einer Dehnungsmessanordnung (1), insbesondere für einen Achszähler (91), umfassend
- wenigstens ein Dehnungssensorelement (5), insbesondere eine optische Faser (6) mit einem Fiber-Bragg-Gitter (6a, FBG),
- einen Träger (2), auf dem das Dehnungssensorelement (5) befestigt ist, und
- eine zu überwachende Struktur (4), insbesondere eine Eisenbahnschiene, auf der der Träger (2) befestigt ist, wobei zumindest ein Teil des Trägers (2) im auf der Struktur (4) befestigten Zustand des Trägers (2) durch die Struktur (4) in einem elastisch verformten Zustand gehalten wird,
wobei der Träger (2) ausgebildet ist mit einem ersten Trägerstück (T1) und einen zweiten Trägerstück (T2), die voneinander beabstandet einander gegenüberliegen,
und wobei das Dehnungssensorelement (5) zumindest mit einem ersten Fixierpunkt (7) am ersten Trägerstück (T1), und zumindest mit einem zweiten Fixierpunkt (8) am zweiten Trägerstück (T2), und mit einem Mittelabschnitt (5a) zwischen den Fixierpunkten (7, 8) weder am ersten noch am zweiten Trägerstück (T1, T2) befestigt ist,
in einem Montageverfahren nach einem der Ansprüche 1 bis 4.

6. Verwendung nach Anspruch 5, **dadurch gekennzeichnet, dass** die Dehnungsmessanordnung (1) so ausgebildet ist,
dass der Teil des Trägers (2), der im auf der Struktur (4) befestigten Zustand des Trägers (2) durch die Struktur (4) in einem elastisch verformten Zustand gehalten wird, das erste Trägerstück (T1) und das zweite Trägerstück (T2) umfasst, wobei das erste Trägerstück (T1) und das zweite Trägerstück (T2) zumindest mit einer Richtungskomponente entlang einer Erstreckungsrichtung (ER) des Dehnungssensorelements (5) zueinander elastisch verspannt sind.

7. Verwendung nach Anspruch 6, **dadurch gekennzeichnet, dass** die Dehnungsmessanordnung (1) so ausgebildet ist, dass das erste und zweite Trägerstück (T1, T2) durch eine Spange (31) miteinander verbunden sind, insbesondere wobei die Spange (31) vom Dehnungssensorelement (5) um einem Abstand AS beabstandet ist, bevorzugt wobei für den Abstand AS und einen Abstand AE von erstem und zweitem Fixierpunkt (7, 8) gilt: AS≥1*AE, besonders bevorzugt AS≥3*AE.

8. Verwendung nach Anspruch 6 oder 7, **dadurch gekennzeichnet,**
**dass** die Dehnungsmessanordnung (1) so ausgebildet ist, dass der Träger (2) ein Verspannlager (44; 83) ausbildet, an oder in welchem ein Verspannelement (41; 81) anordenbar ist, das am ersten und zweiten Trägerstück (T1, T2) angreift,
insbesondere wobei Verspannlager (44) und Verspannelement (41) nach Art eines Exzenters zusammenwirken.

9. Verwendung nach Anspruch 8, **dadurch gekennzeichnet, dass** während des Montageverfahrens das an oder im Verspannlager (44; 83) angeordnete Verspannelement (41; 81) von dem Träger (2) abgebrochen wird, insbesondere aus dem Innenbereich des Verspannlagers (44).

## Claims

1. Method of mounting a strain gauge arrangement (1), in particular for an axle counter (91),
the strain gauge arrangement (1) comprising
- at least one strain sensor element (5), in particular an optical fiber (6) with a fiber Bragg grating (6a, FBG),
- a carrier (2), to which the strain sensor element (5) is fastened, and
- a structure (4) to be monitored, in particular a railroad track, to which the carrier (2) is fastened, wherein at least a part of the carrier (2) is kept in an elastically deformed state by the structure (4) when the carrier (2) is fastened to the structure (4),
wherein the carrier (2) is embodied with a first carrier piece (T1) and a second carrier piece (T2), which oppose one another in spaced apart fashion,
and wherein the strain sensor element (5) is fastened to the first carrier piece (T1) with at least one first fixing point (7), to the second carrier piece (T2) with at least one second fixing point (8), and to neither the first nor the second carrier piece (T1, T2) with a central section (5a) between the fixing points (7, 8),
**characterized by** the following steps:
a) at least the part of the carrier (2) is elastically braced by means of a bracing element (41; 81);
b) at least the part of the carrier (2) is kept in the elastically braced state by means of the bracing element (41; 81) and the carrier (2) is fastened, in particular adhesively bonded, to the structure (4) to be monitored;
c) the bracing element (41; 81) is removed.

2. The method as claimed in claim 1, **characterized in that** the bracing element (41) is securely connected to the carrier (2) before step a), and **in that** the bracing element (41) is broken off from the carrier (2) for step a).

3. The method as claimed in claim 1, **characterized in that** the bracing element (81) is securely connected to the carrier (2) in steps a) and b), and **in that** the bracing element (81) is broken off from the carrier (2) for step c).

4. The method as claimed in claim 2 or 3, **characterized in that**, following the assembly of one or more strain gauge arrangements (1), the bracing elements (41; 81) which were broken off and removed in step c) are checked for completeness.

5. The use of a strain gauge arrangement (1), in particular for an axle counter (91), comprising
- at least one strain sensor element (5), in particular an optical fiber (6) with a fiber Bragg grating (6a, FBG),
- a carrier (2), to which the strain sensor element (5) is fastened, and
- a structure (4) to be monitored, in particular a railroad track, to which the carrier (2) is fastened, wherein at least a part of the carrier (2) is kept in an elastically deformed state by the structure (4) when the carrier (2) is fastened to the structure (4),
wherein the carrier (2) is embodied with a first carrier piece (T1) and a second carrier piece (T2), which oppose one another in spaced apart fashion,
and wherein the strain sensor element (5) is fastened to the first carrier piece (T1) with at least one first fixing point (7), to the second carrier piece (T2) with at least one second fixing point (8), and to neither the first nor the second carrier piece (T1, T2) with a central section (5a) between the fixing points (7, 8),
in a mounting method according to one of the claims 1 to 4,

6. The use as claimed in claim 5, **characterized in that** the strain gauge arrangement (1) is embodied such that the part of the carrier (2) which is kept in an elastically deformed state by the structure (4) when the carrier (2) is fastened to the structure (4) comprises the first carrier piece (T1) and the second carrier piece (T2), wherein the first carrier piece (T1) and the second carrier piece (T2) are elastically braced with respect to one another with at least a direction component along an extension direction (ER) of the strain sensor element (5).

7. The use as claimed in claim 6, **characterized in that** the strain gauge arrangement (1) is embodied such that the first and second carrier piece (T1, T2) are connected to one another by a bracket (31), in particular wherein the bracket (31) is spaced apart from the strain sensor element (5) by a distance AS, preferably where the following applies to the distance AS and a distance AE from the first to the second fixing point (7, 8): AS≥1 * AE, particularly preferably AS≥3 * AE.

8. The use as claimed in claim 6 or 7, **characterized**
**in that** the strain gauge arrangement (1) is embodied such that the carrier (2) forms a bracing bearing (44; 83), at or in which a bracing element (41; 81), which engages on the first and second carrier piece (T1, T2), is arrangeable, in particular where the bracing bearing (44) and bracing element (41) interact in the style of a cam.

9. The use as claimed in claim 8, **characterized in that** during the mounting method, the bracing element (41; 81) arranged at or in the bracing bearing (44; 83) has been broken off from the carrier (2), in particular from the inner region of the bracing bearing (44).

## Revendications

1. Procédé de montage d'un arrangement de mesure de dilatation (1), notamment pour un compteur d'essieux (91), l'arrangement de mesure de dilatation (1) comprenant
- au moins un élément capteur de dilatation (5), notamment une fibre optique (6) pourvue d'un réseau de Bragg à fibres (6a, FBG),
- un élément porteur (2) sur lequel est fixé l'élément capteur de dilatation (5),
et
- une structure (4) à surveiller, notamment un rail de chemin de fer, sur laquelle est fixé l'élément porteur (2), au moins une partie de l'élément porteur (2), dans l'état fixé sur la structure (4) de l'élément porteur (2), étant maintenue par la structure (4) dans un état déformé élastiquement,
l'élément porteur (2) étant configuré avec une première pièce d'élément porteur (T1) et une deuxième pièce d'élément porteur (T2) qui sont en vis-à-vis l'une de l'autre en étant espacées l'une de l'autre,
et l'élément capteur de dilatation (5) étant fixé au moins avec un premier point de calage (7) à la première pièce d'élément porteur (T1), et au moins avec un deuxième point de calage (8) à la deuxième pièce d'élément porteur (T2), et avec une portion centrale (5a) entre les points de calage (7, 8) ni à la première ni à la deuxième pièce d'élément porteur (T1, T2), **caractérisé par** les étapes suivantes :
a) au moins une partie de l'élément porteur (2) est gauchie élastiquement au moyen d'un élément de gauchissement (41 ; 81) ;
b) au moins la partie de l'élément porteur (2) est maintenue dans l'état gauchi élastiquement au moyen de l'élément de gauchissement (41 ; 81) et l'élément porteur (2) est fixé, notamment collé, sur la structure (4) à surveiller ;
c) l'élément de gauchissement (41 ; 81) est retiré.

2. Procédé selon la revendication 1, **caractérisé en ce que** l'élément de gauchissement (41) est relié de manière fixe à l'élément porteur (2) avant l'étape a) et **en ce que** pour l'étape a), l'élément de gauchissement (41) est cassé de l'élément porteur (2).

3. Procédé selon la revendication 1, **caractérisé en ce qu'**aux étapes a) et b), l'élément de gauchissement (81) est relié de manière fixe à l'élément porteur (2) et **en ce que** pour l'étape c), l'élément de gauchissement (81) est cassé de l'élément porteur (2).

4. Procédé selon la revendication 2 ou 3, **caractérisé en ce qu'**après le montage d'un ou plusieurs arrangements de mesure de dilatation (1), les éléments de gauchissement (41 ; 81) cassés et retirés à l'étape c) sont soumis à un contrôle d'intégrité.

5. Utilisation d'un arrangement de mesure de dilatation (1), notamment pour un compteur d'essieux (91), comprenant
- au moins un élément capteur de dilatation (5), notamment une fibre optique (6) pourvue d'un réseau de Bragg à fibres (6a, FBG),
- un élément porteur (2) sur lequel est fixé l'élément capteur de dilatation (5), et
- une structure (4) à surveiller, notamment un rail de chemin de fer, sur laquelle est fixé l'élément porteur (2), au moins une partie de l'élément porteur (2), dans l'état fixé sur la structure (4) de l'élément porteur (2), étant maintenue par la structure (4) dans un état déformé élastiquement,
l'élément porteur (2) étant configuré avec une première pièce d'élément porteur (T1) et une deuxième pièce d'élément porteur (T2) qui sont en vis-à-vis l'une de l'autre en étant espacées l'une de l'autre,
et l'élément capteur de dilatation (5) étant fixé au moins avec un premier point de calage (7) à la première pièce d'élément porteur (T1), et au moins avec un deuxième point de calage (8) à la deuxième pièce d'élément porteur (T2), et avec une portion centrale (5a) entre les points de calage (7, 8) ni à la première ni à la deuxième pièce d'élément porteur (T1, T2),
dans un procédé de montage selon l'une des revendications 1 à 4.

6. Utilisation selon la revendication 5, **caractérisée en ce que** l'arrangement de mesure de dilatation (1) est configuré de telle sorte que la partie de l'élément porteur (2), qui est maintenue par la structure (4) dans un état déformé élastiquement dans l'état de l'élément porteur (2) fixé sur la structure (4), comprend la première pièce d'élément porteur (T1) et la deuxième pièce d'élément porteur (T2), la première pièce d'élément porteur (T1) et la deuxième pièce d'élément porteur (T2) étant gauchies élastiquement l'une par rapport à l'autre avec au moins une composante directionnelle le long d'une direction d'extension (ER) de l'élément capteur de dilatation (5).

7. Utilisation selon la revendication 6, **caractérisée en ce que** l'arrangement de mesure de dilatation (1) est configuré de telle sorte que la première et la deuxième pièce d'élément porteur (T1, T2) sont reliées l'une à l'autre par une barrette (31), la barrette (31) étant notamment espacée de l'élément capteur de dilatation (5) d'un écart AS, la règle suivante s'appliquant de préférence pour l'écart AS et un écart AE entre le premier et le deuxième point de calage (7, 8) : AS ≥ 1*AE, notamment de préférence AS ≥ 3*AE.

8. Utilisation selon la revendication 6 ou 7, **caractérisée en ce que** l'arrangement de mesure de dilatation (1) est configuré de telle sorte que l'élément porteur (2) forme un support de gauchissement (44 ; 83) sur ou dans lequel peut être disposé un élément de gauchissement (41 ; 81) qui vient en prise au niveau de la première et de la deuxième pièce d'élément porteur (T1, T2), le support de gauchissement (44) et l'élément de gauchissement (41) coopérant notamment à la manière d'un excentrique.

9. Utilisation selon la revendication 8, **caractérisée en ce que** pendant le procédé de montage, l'élément de gauchissement (41 ; 81) disposé sur ou dans le support de gauchissement (44 ; 83) est cassé de l'élément porteur (2), notamment hors d'une zone interne du support de gauchissement (44).
